# EUROPÄISCHE PATENTSCHRIFT

(11) **EP 2 718 909 B1**
(45) Veröffentlichungstag und Bekanntmachung des Hinweises auf die Patenterteilung: **12.08.2015**
(21) Anmeldenummer: 12727307.6
(22) Anmeldetag: 05.06.2012
(51) Int. Cl.: G08C 19/00, B60R 25/20, G07C 9/00

(54) **VERFAHREN UND VORRICHTUNG ZUM ANLERNEN MEHRERER SCHLÜSSEL AN EINE BERECHTIGUNGSEINRICHTUNG EINES FAHRZEUGS**
METHOD AND DEVICE FOR PROGRAMMING A PLURALITY OF KEYS TO AN AUTHORISATION DEVICE OF A VEHICLE
PROCÉDÉ ET DISPOSITIF D'APPRENTISSAGE DE PLUSIEURS CLEFS SUR UN APPAREIL D'AUTORISATION D'UN VÉHICULE

(30) Priorität: 09.06.2011 DE 102011103674
(43) Veröffentlichungstag der Anmeldung: 16.04.2014
(73) Patentinhaber: Audi AG, 85045 Ingolstadt (DE)
(72) Erfinder: OTT, Tobias, 85283 Wolnzach (DE); SASSMANNSHAUSEN, Patrick, 85113 Böhmfeld (DE)
(74) Vertreter: Brandt, Kai
(86) Internationale Anmeldenummer: PCT/EP2012/002389
(87) Internationale Veröffentlichungsnummer: WO 2012/167915

(56) Entgegenhaltungen:
- EP-A2- 1 041 224
- DE-A1- 10 112 573
- DE-A1-102008 052 239

## Beschreibung

Verfahren und Vorrichtung zum Anlernen mehrerer Schlüssel an eine Berechtigungseinrichtung eines Fahrzeugs, wobei die in einem Empfangsbereich einer Sende-/Empfangseinheit der Berechtigungseinrichtung befindlichen Schlüssel von dieser ein Abfragesignal empfangen, auf das diese ein Antwortsignal an die Berechtigungseinrichtung aussenden.

Derartige Verfahren und Vorrichtungen werden im Fahrzeugbau dazu verwendet, um die zu einem Fahrzeug gehörigen Schlüssel an eine der Diebstahlsicherung dienenden Berechtigungseinrichtung, insbesondere einer Wegfahrsperre, anzulernen. Die angelernten Schlüssel sind daraufhin berechtigt das Fahrzeug in Betrieb zu nehmen. Dazu weisen die Schlüssel jeweils einen integrierten Transponder auf, der mit einer Sende-/Empfangseinheit der Berechtigungseinrichtung eine Funkverbindung zum Austausch von Datentelegrammen aufbauen kann.

Die derzeit am weitesten verbreitete Methode zum Anlernen mehrerer Schlüssel an eine Berechtigungseinrichtung eines Fahrzeugs sieht vor, dass die Sende-/Empfangseinheit der Berechtigungseinrichtung ein Anlernsignal aussendet und alle im Empfangsbereich befindlichen Schlüssel darauf antworten, wobei nur derjenige Schlüssel mit dem stärksten Antwortsignal von der Berechtigungseinrichtung erkannt wird. Dies hat zur Folge, dass die Schlüssel nacheinander in die Nähe der Sende-/Empfangseinheit gebracht werden müssen, was viele manuelle Eingriffe und eine lange Verfahrensdauer zur Folge hat.

Die DE 10 2008 052 239 A1 offenbart ein Verfahren zum automatischen Anlernen mehrerer Schlüssel an eine Wegfahrsperre eines Fahrzeugs, wobei jedem Schlüssel im Vorfeld eine unterschiedliche Adresse zugewiesen wird und während des Anlernens der jeweilige Schlüssel von der Wegfahrsperre über die zugewiesene Adresse selektiv angesprochen wird. Dieses Verfahren erfordert folglich einen vorgelagerten Schritt, in dem den für das Fahrzeug bestimmten Schlüsseln individuelle Adressen zugewiesen werden müssen. Dadurch verlängert sich die Zeitdauer für das Anlernen der Schlüssel und es sind manuelle Eingriffe in den Ablauf notwendig.

Die gattungsbildende DE 101 12 573 A1 beschreibt ein Verfahren zum Initialisieren eines Diebstahlschutzsystems für ein Kraftfahrzeug, wobei das Diebstahlschutzsystem zunächst ein Abfragesignal aussendet. In jedem Codegeber, der das Abfragesignal empfängt, wird eine für den jeweiligen Codegeber charakteristische Sendezeit mit Hilfe eines Zufallsprinzips erzeugt, worauf ein Antwortsignal innerhalb dieser Sendezeit ausgesendet wird. Wenn nicht alle Codegeber unterschieden werden können, beispielsweise weil zwei oder mehr Codegeber eine identische Sendezeit erzeugt haben, dann startet das Verfahren für die nicht unterscheidbaren Codegeber von neuem, bis alle Codegeber erkannt sind. Durch die Anwendung eines Zufallsprinzips besteht somit stets die Möglichkeit, dass mehrere Verfahrenszyklen durchgeführt werden müssen, bis alle Codegeber erkannt sind.

Aufgabe der vorliegenden Erfindung ist es daher ein Verfahren und eine Vorrichtung zum schnellen und zuverlässigen Anlernen mehrerer Schlüssel an eine Berechtigungseinrichtung eines Fahrzeugs mit möglichst wenig manuellen Eingriffen bereitzustellen.

Diese Aufgabe wird durch die Merkmale des Patentanspruchs 1 bzw. 5 gelöst.

Ein Verfahren zum Anlernen mehrerer Schlüssel an eine Berechtigungseinrichtung eines Fahrzeugs umfasst die folgenden Schritte:
- Aussenden eines Abfragesignals durch die Berechtigungseinrichtung;
- Messen eines von der räumlichen Lage des Schlüssels abhängigen Signalparameters des Abfragesignals durch die im Empfangsbereich befindlichen Schlüssel;
- Ermitteln eines schlüsselspezifischen Zeitfensters in Abhängigkeit des Signalparameters durch die jeweiligen Schlüssel;
- Senden eines Antwortsignals im schlüsselspezifischen Zeitfenster durch die jeweiligen Schlüssel und Registrieren der Antwortsignale in der Berechtigungseinrichtung;

Indem jeder im Empfangsbereich des Abfragesignals befindliche Schlüssel für sich den mindestens einen von der räumlichen Lage des Schlüssels abhängigen Signalparameter misst und daraus ein schlüsselspezifisches Zeitfenster ermittelt, wird sichergestellt, dass sich die Antwortsignale der Schlüssel nicht überlappen. Der Signalparameter hängt direkt von der Lage des Schlüssels im Raum ab, die für zwei Schlüssel nie identisch sein kann. Der manuelle Aufwand für das Anlernen mehrerer Schlüssel wird dadurch reduziert, indem die anzulernenden Schlüssel nur in den Empfangsbereich gebracht und das Verfahren gestartet werden muss. Die Berechtigungseinrichtung registriert die nacheinander eingehenden Antwortsignale und führt diese Schlüssel für zukünftige Berechtigungsanfragen als berechtigt. Als Schlüssel sollen in diesem Zusammenhang alle Mittel verstanden werden, die von einem Nutzer mitgeführt und zur funkgestützten Feststellung der Nutzungsberechtigung des Fahrzeugs verwendet werden können.

In einer bevorzugten Ausführung des Verfahrens enthält das Antwortsignal einen für den jeweiligen Schlüssel charakteristischen Identifikationscode. Durch den in das Antwortsignal eingebetteten Identifikationscode kann die Berechtigungseinrichtung Rückschlüsse auf den sendenden Schlüssel ziehen.

In einer bevorzugten Ausführung des Verfahrens errechnet sich das schlüsselspezifische Zeitfenster mittels eines mathematischen Algorithmus aus dem Signalparameter. Der mathematische Algorithmus ist für alle Schlüssel gleich und so aufgebaut, dass sich keine identischen Zeitfenster für Schlüssel an unterschiedlichen räumlichen Positionen ergeben können.

In einer bevorzugten Ausführung des Verfahrens wird der Signalparameter von einem die Feldstärke des Abfragesignals repräsentierenden Wert gebildet. Die Feldstärke des Abfragesignals eignet sich besonders gut als Signalparameter, da sie sich über den räumlichen Verlauf stets ändert.

Die Erfindung umfasst auch eine Vorrichtung zum Anlernen mehrerer Schlüssel an eine Berechtigungseinrichtung eines Fahrzeugs, wobei die in einem Empfangsbereich einer Sende-/Empfangseinheit der Berechtigungseinrichtung befindlichen Schlüssel von dieser ein Abfragesignal empfangen und wobei der jeweilige Schlüssel aus mindestens einem von der räumlichen Lage des Schlüssels abhängigen Signalparameter des Abfragesignals ein schlüsselspezifisches Zeitfenster ermittelt, während dem der jeweilige Schlüssel ein Antwortsignal aussendet, wobei die Sende-/Empfangseinheit (4) ausgestaltet ist, das Antwortsignal zu empfangen und die Berechtigungseinrichtung (3) ausgestaltet ist, das Antwortsignal zu registrieren.

Zur Umsetzung des erfindungsgemäßen Verfahrens ist eine Vorrichtung gezeigt, die eine Berechtigungseinrichtung mit einer Sende-/Empfangseinheit aufweist. Die Sende-/Empfangseinheit ist mit einer Spule zum Empfang und dem Versenden von Funkwellen ausgestattet. Wird das Verfahren gestartet, so sendet die Sende-/Empfangseinheit ein Abfragesignal über einen räumlich begrenzten Empfangsbereich aus. Alle in diesem Empfangsbereich befindlichen Schlüssel empfangen dieses Signal und messen mindestens einen bestimmten Signalparameter daraus. Jeder Schlüssel ermittelt daraufhin unabhängig voneinander ein Zeitfenster für sein Antwortsignal und sendet das Antwortsignal während dieses Zeitfensters aus. Die Antwortsignale werden nacheinander von der Sende-/Empfangseinheit empfangen und an die Berechtigungseinrichtung zur dauerhaften Registrierung weitergeleitet.

In einer bevorzugten Ausführung der Vorrichtung repräsentiert der Signalparameter einen Wert der Feldstärke, insbesondere einen Feldstärkenvektor, des Abfragesignals. Die Feldstärke verändert sich ausgehend von der Sende-/Empfangseinheit über den räumlichen Verlauf und ist von den Schlüsseln sehr einfach messbar. Wird ein Feldstärkenvektor herangezogen, so ergibt sich ein noch präziserer Signalparameter. Dazu kann entweder die stärkste Raumachse herangezogen oder ein Mittelwert aus den drei Raumachsen gebildet werden.

In einer bevorzugten Ausführung der Vorrichtung weisen die Schlüssel jeweils einen Transponder, eine Recheneinheit, einen nicht-flüchtigen Speicher und eine Energiequelle auf. Die Energiequelle ist vorzugsweise in Form einer Batterie ausgeführt und versorgt die angeschlossenen Bauteile mit elektrischer Energie. Eine alternative Ausführungsform sieht vor, dass die Energiequelle als ein Kondensator ausgebildet ist, der bedarfsweise von einem Spulenpaar aus fahrzeugseitiger und schlüsselseitiger Spule drahtlos geladen werden kann. Der Transponder dient dem Senden und Empfangen von Datentelegrammen, insbesondere des Abfragesignals und des Antwortsignals, mittels Funkwellen. Der nicht-flüchtige Speicher enthält unter anderem den Identifikationscode des Schlüssels und den Algorithmus zur Umrechnung des Signalparameters in ein Zeitfenster. Die Recheneinheit steuert die Funktion der Bauteile und führt die mathematischen Transformationen aus.

In einer bevorzugten Ausführung der Vorrichtung ist die Berechtigungseinrichtung als Wegfahrsperre ausgebildet. Die Wegfahrsperre prüft bei einer beabsichtigten Inbetriebnahme des Fahrzeugs, ob dazu ein berechtigter Schlüssel verwendet wird und gibt in Abhängigkeit des Prüfergebnisses den Startvorgang frei oder verweigert diesen.

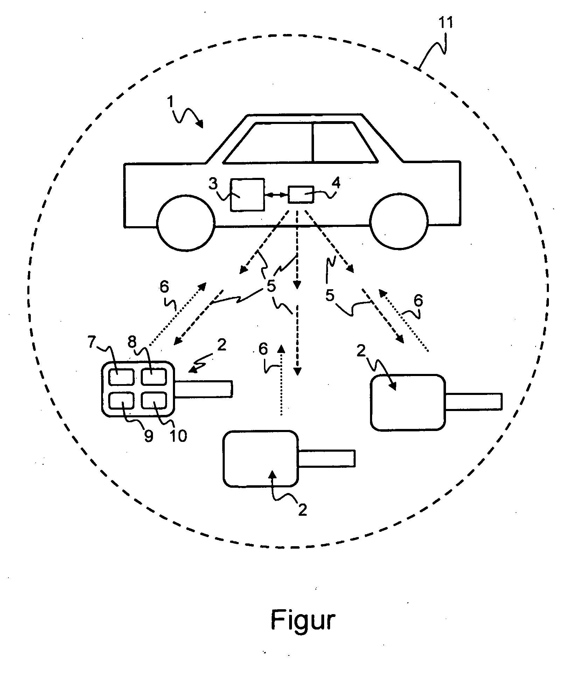

Weitere Einzelheiten und Vorteile der Erfindung ergeben sich aus der nachstehenden Beschreibung eines bevorzugten Ausführungsbeispiels unter Bezugnahme auf die Zeichnung.

Darin zeigt die Figur eine schematische Darstellung einer Vorrichtung zum Anlernen mehrerer Schlüssel an eine Berechtigungseinrichtung eines Fahrzeugs.

Gemäß der Figur hat ein Fahrzeug 1 eine Berechtigungseinrichtung 3 zur Verhinderung einer Inbetriebnahme des Fahrzeugs 1 durch nicht berechtigte Nutzer, die mit einer Sende-/Empfangseinheit 4 in Verbindung steht. Die Sende-/Empfangseinheit 4 sendet manuell auslösbar ein Abfragesignal 5 aus, das alle in einem Empfangsbereich 11 befindlichen Schlüssel 2 empfangen. Jeder Schlüssel 2 weist eine Energiequelle 10, vorzugsweise in Form einer Batterie auf, die einen Transponder 7, eine Recheneinheit 8 und einen nicht-flüchtigen Speicher 9 mit elektrischer Energie versorgt. In dem Speicher 9 sind ein für den jeweiligen Schlüssel 2 charakteristischer Identifikationscode und ein mathematischer Algorithmus hinterlegt. Der Transponder 7 dient dem Empfang und Versand von Datentelegrammen mittels Funkwellen. Die vom Transponder 7 ermittelte Feldstärke des Abfragesignals 5 wird an die Recheneinheit 8 übermittelt, die wiederum mit Hilfe des Algorithmus ein schlüsselspezifisches Zeitfenster errechnet. Der Transponder 7 sendet den Identifikationscode aus dem Speicher 9 während des Zeitfensters in Form eines Antwortsignals 6 an die Sende-/Empfangseinheit 4 aus. Die Sende-/Empfangseinheit 4 empfängt die Antwortsignale 6 der Schlüssel 2 und leitet diese zur Registrierung an die Berechtigungseinrichtung 3 weiter. Fortan wird die Berechtigungseinrichtung 3 die registrierten Schlüssel 2 als berechtigt zur Inbetriebnahme des Fahrzeugs 1 führen.

### Liste der Bezugszeichen:

- 1: Fahrzeug
- 2: Schlüssel
- 3: Berechtigungseinrichtung
- 4: Sende-/Empfangseinheit
- 5: Abfragesignal
- 6: Antwortsignal
- 7: Transponder
- 8: Recheneinheit
- 9: Speicher
- 10: Energiequelle
- 11: Empfangsbereich

## Patentansprüche

1. Verfahren zum Anlernen mehrerer Schlüssel (2) an eine Berechtigungseinrichtung (3) eines Fahrzeugs (1), umfassend die folgenden Schritte:
- Aussenden eines Abfragesignals (5) durch die Berechtigungseinrichtung (3);
- Messen eines von der räumlichen Lage des Schlüssels (2) abhängigen Signalparameters des Abfragesignals (5) durch die im Empfangsbereich (11) befindlichen Schlüssel (2);
- Ermitteln eines schlüsselspezifischen Zeitfensters in Abhängigkeit des Signalparameters durch die jeweiligen Schlüssel (2);
- Senden eines Antwortsignals (6) im schlüsselspezifischen Zeitfenster durch die jeweiligen Schlüssel (2) und Registrieren der Antwortsignale (6) in der Berechtigungseinrichtung (3);

2. Verfahren nach Anspruch 1, **dadurch gekennzeichnet, dass** das Antwortsignal (6) einen für den jeweiligen Schlüssel (2) charakteristischen Identifikationscode enthält.

3. Verfahren nach Anspruch 1 oder 2, **dadurch gekennzeichnet, dass** sich das schlüsselspezifische Zeitfenster mittels eines mathematischen Algorithmus aus dem Signalparameter errechnet.

4. Verfahren nach einem der Ansprüche 1 bis 3, **dadurch gekennzeichnet, dass** der Signalparameter von einem die Feldstärke des Abfragesignals (5) repräsentierenden Wert gebildet wird.

5. Vorrichtung zum Anlernen mehrerer Schlüssel (2) an eine Berechtigungseinrichtung (3) eines Fahrzeugs (1), wobei die in einem Empfangsbereich (11) einer Sende-/Empfangseinheit (4) der Berechtigungseinrichtung (3) befindlichen Schlüssel (2) von dieser ein Abfragesignal (5) empfangen, **dadurch gekennzeichnet, dass** der jeweilige Schlüssel (2) aus mindestens einem von der räumlichen Lage des Schlüssels (2) abhängigen Signalparameter des Abfragesignals (5) ein schlüsselspezifisches Zeitfenster ermittelt, während dem der jeweilige Schlüssel (2) ein Antwortsignal (6) aussendet, wobei die Sende/Empfangseinheit (4) ausgestaltet ist, das Antwortsignal (6) zu empfangen und die Berechtigungseinrichtung (3) ausgestaltet ist, das Antwortsignal (6) zu registrieren.

6. Vorrichtung nach Anspruch 5, **dadurch gekennzeichnet, dass** der Signalparameter einen Wert der Feldstärke des Abfragesignals (5) repräsentiert.

7. Vorrichtung nach Anspruch 6, **dadurch gekennzeichnet, dass** der Wert der Feldstärke ein Feldstärkenvektor ist.

8. Vorrichtung nach einem der Ansprüche 5 bis 7, **dadurch gekennzeichnet, dass** die Schlüssel (2) jeweils einen Transponder (7), eine Recheneinheit (8), einen nicht-flüchtigen Speicher (9) und eine Energiequelle (10) aufweisen.

9. Vorrichtung nach einem der Ansprüche 5 bis 8, **dadurch gekennzeichnet, dass** die Berechtigungseinrichtung (3) als Wegfahrsperre ausgebildet ist.

## Claims

1. Method for programming a plurality of keys (2) to an authorisation means (3) of a vehicle (1), comprising the steps of:
- transmitting a query signal (5) by means of the authorisation means (3);
- measuring a signal parameter, dependent on the spatial location of the key (2), of the query signal (5) by means of the key (2) located in the reception range (11);
- determining a key-specific time window by means of the respective key (2), depending on the signal parameter;
- transmitting a response signal (6) by means of the respective key (2) within the key-specific time window and recording the response signal (6) in the authorisation means (3).

2. Method according to claim 1, **characterised in that** the response signal (6) contains an identification code that is characteristic of the respective key (2).

3. Method according to either claim 1 or claim 2, **characterised in that** the key-specific time window is calculated from the signal parameter using a mathematical algorithm.

4. Method according to any of claims 1 to 3, **characterised in that** the signal parameter is formed by a value representing the field strength of the query signal (5).

5. Device for programming a plurality of keys (2) to an authorisation means (3) of a vehicle (1), the keys (2) located in a reception range (11) of a transceiver unit (4) of the authorisation means (3) receiving a query signal (5) therefrom, **characterised in that** the respective key (2) determines a key-specific time window from at least one signal parameter, which is dependent on the spatial location of the key (2), of the query signal (5), during which time window the respective key (2) transmits a response signal (6), the transceiver unit (4) being configured to receive the response signal (6) and the authorisation means (3) being configured to record the response signal (6).

6. Device according to claim 5, **characterised in that** the signal parameter represents a value of the field strength of the query signal (5).

7. Device according to claim 6, **characterised in that** the value of the field strength is a field strength vector.

8. Device according to any of claims 5 to 7, **characterised in that** the keys (2) each have a transponder (7), a computation unit (8), a non-volatile memory (9) and an energy source (10).

9. Device according to any of claims 5 to 8, **characterised in that** the authorisation means (3) is an engine immobiliser.

## Revendications

1. Procédé d'apprentissage de plusieurs clés (2) sur un dispositif de validation (3) d'un véhicule (1), comprenant les étapes consistant à :
- envoyer un signal d'interrogation (5) par le dispositif de validation (3) ;
- mesurer un paramètre du signal d'interrogation (5) qui est fonction de la position spatiale de la clé (2) par la clé (2) se trouvant dans la zone de réception (11) ;
- déterminer une fenêtre temporelle spécifique à la clé en fonction du paramètre de signal par la clé respective (2) ;
- envoyer un signal de réponse (6) dans la fenêtre temporelle spécifique à la clé par la clé respective (2) et enregistrer les signaux de réponse (6) dans le dispositif de validation (3).

2. Procédé selon la revendication 1, **caractérisé en ce que** le signal de réponse (6) contient un code d'identification caractéristique pour la clé respective (2).

3. Procédé selon la revendication 1 ou la revendication 2, **caractérisé en ce que** la fenêtre temporelle spécifique à la clé se calcule au moyen d'un algorithme mathématique à partir du paramètre de signal.

4. Procédé selon l'une quelconque des revendications 1 à 3, **caractérisé en ce que** le paramètre de signal est formé par une valeur représentant l'intensité de champ du signal d'interrogation (5).

5. Dispositif d'apprentissage de plusieurs clés (2) sur un dispositif de validation (3) d'un véhicule (1), dans lequel les clés (2) se trouvant dans une zone réceptrice (11) d'une unité d'émission/-réception (4) du dispositif de validation (3) reçoivent de celle-ci un signal d'interrogation (5), **caractérisé en ce que** la clé respective (2) détermine à partir d'un paramètre du signal d'interrogation (5) qui est fonction de la position spatiale de la clé (2) une fenêtre temporelle spécifique à la clé, au cours de laquelle la clé respective (2) envoie un signal de réponse (6), dans lequel l'unité d'émission/- réception (4) est conçu pour recevoir le signal de réponse (6) et le dispositif de validation (3) est conçu pour enregistrer le signal de réponse (6).

6. Dispositif selon la revendication 5, **caractérisé en ce que** le paramètre de signal représente une valeur de l'intensité de champ du signal d'interrogation (5).

7. Dispositif selon la revendication 6, **caractérisé en ce que** la valeur de l'intensité de champ est un vecteur de l'intensité de champ.

8. Dispositif selon l'une quelconque des revendications 5 à 7, **caractérisé en ce que** les clés (2) présentent respectivement un transpondeur (7), une unité de calcul (8), une mémoire non volatile (9) et une source d'énergie (10).

9. Dispositif selon l'une quelconque des revendications 5 à 8, **caractérisé en ce que** le dispositif de validation (3) est conçu sous la forme d'un dispositif antivol.
